(19)

**Europäisches Patentamt**

**European Patent Office**

**Office européen des brevets**

(11)　**EP 1 227 336 B1**

(12)　　　**EUROPÄISCHE PATENTSCHRIFT**

(45) Veröffentlichungstag und Bekanntmachung des
Hinweises auf die Patenterteilung:
**14.04.2004   Patentblatt 2004/16**

(51) Int Cl.⁷: **G01S 13/90**, G01S 7/41,
G01S 13/91

(21) Anmeldenummer: **01124199.9**

(22) Anmeldetag: **11.10.2001**

(54) **ROSAR-Verfahren zur Schlechtwetter-Hubschrauberlandung und zur Erkennung und Entdeckung verdeckter Ziele**

ROSAR method for helicopter landing in bad weather and recognition of hidden targets

Méthode ROSAR pour atterrisage d' hélicoptère par mauvais temps et pour reconnaître des cibles cachées

(84) Benannte Vertragsstaaten:
**DE FR GB**

(30) Priorität: **18.01.2001  DE 10101992**

(43) Veröffentlichungstag der Anmeldung:
**31.07.2002   Patentblatt 2002/31**

(73) Patentinhaber: **EADS Deutschland GmbH
81663 München (DE)**

(72) Erfinder:
 • **Klausing, Helmut, Dr.
82234 Hochstadt (DE)**

 • **Kaltschmidt, Horst, Dr.
85579 Neubiberg (DE)**

(74) Vertreter: **Meel, Thomas
Patentassessor,
c/o Dornier GmbH
L H G
88039 Friedrichshafen (DE)**

(56) Entgegenhaltungen:
 **DE-A- 19 521 624      DE-C- 3 922 086
 DE-C- 4 323 511      US-A- 4 737 788**

**Beschreibung**

Die Erfindung bezieht sich auf ein ROSAR-Verfahren zur Schlechtwetter-Hubschrauberlandung und zur Erkennung und Entdeckung verdeckter Ziele gemäß den Merkmalen des Anspruchs 1.

Aus den Druckschriften DE 39 22 086 und DE 43 23 511 ist ein ROSAR-Gerät bekannt, das in Echtzeitnähe im On-line-Betrieb einsetzbar ist und neben der Kartographie, der Hinderniswarnung, der Minendetektion und der Landehilfe auch der Zielaufklärung und -verfolgung sowie der Flugkörpereinweisung dient. Hierbei wird das ROSAR-Gerät pulsfrequent oder im FM-CW-Betrieb eingesetzt und arbeitet im cm- bzw. im mm-Wellenlängenbereich.

Für SAR und ROSAR-Systeme ist beim Stand der Technik wegen des Ausfalls laufzeitabhängiger Entfernungsinformationen die Bildung eines sogenannten "Radars mit Senkrechtblick" nur durch ein aufwendiges Phased-Array-System realisierbar. Insbesondere verlangt die Durchdringung von Bäumen, Buschwerk und sonstigen Verdeckungen, wie beispielsweise flache Erdschichten, große Wellenlängen, wodurch die geforderte Auflösung nur durch sehr große Antennenabmessungen erreichbar ist. Dadurch ist aber eine enorme Verminderung der Flugleistung und erheblicher Kostenaufwand gegeben.

Der vorliegenden Erfindung liegt die Aufgabe zugrunde, die senkrecht unter einem Hubschrauber liegende Umgebung hochaufgelöst abzubilden und ein Auswerteverfahren aufzuzeigen, bei dem die Entfernungsauflösung nicht wellenlängen- und insbesondere die Horizontalauflösung nicht depressionswinkelabhängig ist, womit die bisherigen Nachteile des Standes der Technik zu beseitigen sind.

Diese Aufgabe wird durch die im Anspruch 1 aufgeführten Merkmale gelöst. In den Unteransprüchen sind Weiterbildungen und Ausgestaltungen angegeben und in der nachfolgenden Beschreibung ist ein Ausführungsbeispiel erläutert. Die Figuren der Zeichnung ergänzen diese Erläuterungen. Es zeigen:

Fig. 1  eine Skizze zur Erläuterung des Zusammenhangs zwischen Depressionswinkel $\Psi$, der Entfernungsauflösung $\Delta R$ und der Horizontalauflösung $\Delta y$,

Fig. 2  ein Schemabild der senkrecht unter einem Hubschrauber abzubildenden $xy$-Ebene, die verdeutlicht, dass jeder Mittelpunkt einer Auflösezelle in Polarkoordinaten durch Angabe von Winkel $\alpha$ und Entfernung $r = L + \Delta y$ gekennzeichnet ist,

Fig. 3a  ein Diagramm mit perspektivischer Darstellung der geometrischen Verhältnisse für die Rotorposition $\alpha$ und

Fig. 3b  ein Diagramm mit einer Darstellung der geometrischen Verhältnisse in der Draufsicht auf die $xyz$-Ebene.

Der allgemeine Erfindungsgedanke der Erfindung sieht vor, dass nicht wie beim klassischen ROSAR eine Auflösungszelle in Entfernung und Azimutwinkel gebildet wird oder nach dem Prinzip der realen Apertur durch eine flächenhafte und festmontierte Antenne die Höhen- und Seitenwinkel erfasst werden, sondern die Auflösezellen nur durch ihre eigenen Dopplerhistorien charakterisiert sind.

Dadurch nützt die Erfindung ein ohnehin vorhandenes ROSAR-System lediglich durch eine spezielle Software-Lösung im ROSAR-Prozessor. Durch die große Entfernung der Empfangsantenne zum Rotordrehpunkt ist eine sehr gute ROSAR-Auflösung auch bei großen Wellenlängen möglich, wie sie aus Gründen der Durchdringung von untergezogenen Zielen, Minen und Personen erforderlich sind.

Bekanntlich erfolgt beim ROSAR die Ermittlung der beiden Koordinaten "Winkel" und "Entfernung" eines Objektes nach zwei getrennten Verfahren. Die Koordinate "Winkel" wird durch Korrelation aller Signale aus einem Entfernungsring mit dem Punktreferenzsignal und die Koordinate "Entfernung" durch Auswertung der Laufzeit der reflektierten Signale gewonnen. Die Entfernungsauflösung ist demnach

$$\Delta R = \frac{c}{2B} \qquad (1)$$

(c "Lichtgeschwindigkeit", $B$ "Bandbreite des Sendesignals").

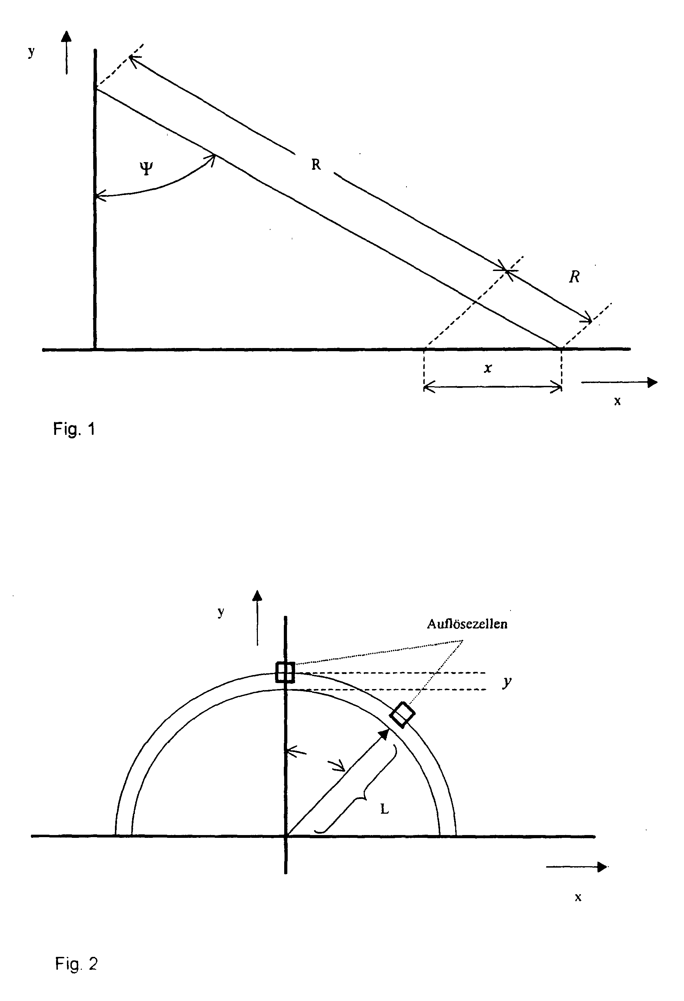

Sieht die Antenne jedoch unter dem Depressionswinkel $\Psi$ auf das aufzulösende Objekt (Fig. 1), so ist die Horizontalauflösung (Entfernungsauflösung am Boden (Fig. 1)) nur

$$\Delta x = \frac{\Delta R}{\sin \Psi}. \qquad (2)$$

Demnach ist für kleine Winkel $\Psi$ ist die Horizontalauflösung viel größer und damit schlechter als die Entfernungsauflösung.

Die kleinste und damit beste erreichbare Entfernungsauflösung ist gegeben durch

$$\Delta R = \frac{\lambda}{2} \tag{3}$$

mit $\lambda$ = "Wellenlänge".

Die größtmögliche theoretische Bandbreite ist durch die Sendefrequenz $f_s$ gegeben, somit gilt $B_{max} = f_s$

$$\Delta R_{min} = \frac{c}{2B} = \frac{c}{2f_s} = \frac{\lambda f_s}{2f_s} = \frac{\lambda}{2}. \tag{4}$$

In der Praxis rechnet man sogar nur mit $B_{max} \leq 0{,}1 f_s$.

Die maximale Azimutwinkelauflösung ist bei ROSAR nach Klausing:

$$\Delta\varphi_{max} = \frac{\lambda}{5L}, \tag{5}$$

L ist dabei der Abstand der ROSAR-Sende-/Empfangsantenne vom Drehpunkt des Rotors, also etwa gleich dem Halbmesser des Hubschrauberrotors.

Die Auflösezelle A ist also gegeben durch:

$$A = \Delta y \Delta x = R\frac{\lambda}{5L}\ \frac{c}{2B\sin\Psi} \tag{6}$$

Die minimale - und damit günstigste - erreichbare Auflösezelle ist also theoretisch

$$A_{min} = \Delta y_{min}\Delta x_{min} = \frac{R\lambda}{5L_{max}}\ \frac{\lambda}{2} \tag{7}$$

und praktisch:

$$A_{min,\ praktisch} = \frac{R}{L_{max}}\lambda^2. \tag{8}$$

Für die Entdeckung untergezogener Ziele insbesondere verdeckter Minen muss mit Rücksicht auf die starke Absorption bei kleinen Wellenlängen eine große Wellenlänge gewählt werden. Nach Ausweis der Formel für $A_{min}$ ist aber die Auflösung dann gerade schlecht.

Während man die Lateralauflösung $\Delta y$ durch Wahl eines großen Wertes für L verbessern kann, ist dies beim Senkrechtblick für die Entfernungs- und Horizontalauflösung nicht der Fall und dies besonders bei kleinen Depressionswinkeln, also bei Senkrechtblick. Hier kommt nun die Erfindung zum Tragen.

Jede Koordinate einer Auflösungszelle (Koordinaten des Mittelpunktes einer Auflösungszelle) in dem abzubildenden Gebiet wird durch eine eigene koordinatenspezifische Dopplerhistorie charakterisiert. Es reicht aus, ein einziges Referenzsignal für einen Kreisring zu berechnen, da auch hier gilt:

$$S_{ref,\Delta\alpha} = S_{ref}(\alpha - \Delta\alpha) \tag{9}$$

Die Berechnung der Ergebnisfunktion $S_{Erg}(\alpha)$ geschieht auch hier dadurch, dass das Referenzsignal korrelierend schrittweise über das Entfernungssignal geschoben wird und jeweils die Kreuzkorrelation ausgeführt wird.

Nachfolgend wird als Beispiel die Referenzfunktion $S_{ref}(L, H, r = L + \Delta y, \alpha)$ für die Mittelpunkte der Auflösezellen ermittelt (Fig. 2). Dabei wird hier von einer feststehenden Sendeantenne ein kontinuierliches Sendesignal der Form:

$$S_{Sende} = S_A \sin 2\pi f_s t \qquad (10)$$

ausgestrahlt.

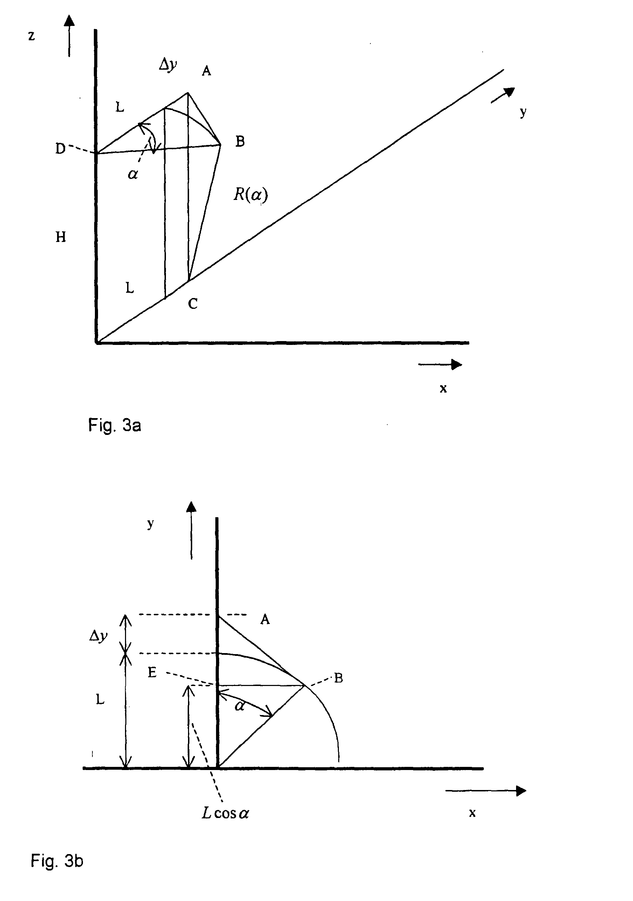

Mithin reflektiert jeder Punkt der abzubildenden *xy*-Ebene mit der Frequenz $f_s$. Die Empfangsantenne befindet sich auf einem rotierenden Rotor oder bei einem Hubschrauber (Winkelgeschwindigkeit $\omega_0$, Winkelstellung des Rotorblatts $\alpha = \omega_0 t$) im Abstand L vom Drehpunkt des Rotorblattes. Dieses befindet sich in einer Höhe H über der abzubildenden *xy*-Ebene (Fig. 2 und 3a).

Vorzugsweise wird ein Kreisring direkt unter der Empfangsantenne zugrundegelegt, wobei der Abstand der Empfangsantenne zum Drehpunkt mit L bezeichnet ist. Die Dicke des Kreisringes beträgt $\Delta y$ und das Referenzsignal mit $\alpha = \nu \cdot \Delta\alpha$ von der Form

$$S_{ref} = \sin 2\pi(f_s + f_D(\nu\Delta\alpha, \Delta y))t \qquad (11)$$

wobei $f_s$ die Sendefrequenz und $f_D$ die Dopplerfrequenz ist.

Die Dopplerfrequenz $f_D$ errechnet sich zu:

$$f_D = \frac{2V(\nu\Delta\alpha,\Delta y)}{c} \cdot f_s \qquad (12)$$

mit

$$V = \frac{dR}{dt}. \qquad (13)$$

wobei $R$ ist die Entfernung der Empfangsantenne vom betrachteten Aufpunkt des abzubildenden Areals mit den Koordinaten $x = 0$, $y = L + \Delta y$ (Fig. 2) ist.

Eine dreidimensionale, perspektivische Darstellung, aus der die geometrischen Verhältnisse leicht erkennbar sind, ist in Fig. 3a dargestellt. Man betrachte das rechtwinklige Dreieck ABC, dessen Hypotenuse die Entfernung $R(\alpha, \Delta y)$ des betrachteten Aufpunktes C zur momentanen Position der Antenne bildet.

Nachfolgend wird das Referenzsignal für einen Aufpunkt mit den Koordinaten ($x = 0$, $y = L + \Delta y$, $z = 0$) berechnet (Fig. 3a und 3b). Wegen der Symmetrie des Problems genügt es, nur den Rotorwinkelbereich von $\alpha = 0$ bis $\alpha = \alpha_{max}$ zu betrachten. Wie vorstehend schon ausgeführt, muss die zeitliche Abhängigkeit der Geschwindigkeit bzw. ihre Abhängigkeit vom Rotorwinkel $\alpha$, mit der sich die Empfangsantenne dem Aufpunkt nähert oder entfernt, ermittelt werden.

Dazu wird zunächst die jeweilige Entfernung $R(\alpha)$ zwischen der winkelabhängigen Rotor-Position und dem Aufpunkt C berechnet. Hat sich die antennentragende Rotorspitze von der Ausgangsposition $\alpha = 0$ (Position A) um den Winkel $\alpha$ weitergedreht (Position B), so hat sich die Entfernung zum Aufpunkt C vom ursprünglichen Wert $R(0) = H$ zu dem für einen beliebigen Winkel $\alpha$ nun gültigen Wert $R(\alpha)$ verändert. Zur Berechnung von $R(\alpha)$ betrachten wir das Dreieck mit den Eckpunkten A,B,C mit den Seiten AB, AC und BC. Man erkennt, dass die Seiten AB und AC einen rechten Winkel bilden. Somit gilt:

$$R^2(\alpha) = (AB)^2 + (AC)^2 \qquad (14)$$

mit

$$(AC) = H. \qquad (15)$$

Die noch unbekannte Seitenlänge der Seite (AB) errechnet sich (gemäß Fig. 3b rechtwinkliges Dreieck mit den Eckpunkten A, B, E) wie folgt:

$$(AB)^2 = (\Delta y + L(1-\cos\alpha))^2 + (L\sin\alpha)^2 + H^2. \qquad (16)$$

Mit den Gleichungen (16) und (15) erhalten wir aus der Gleichung (14) schließlich

$$R(\alpha) = \sqrt{(\Delta y + L(1-\cos\alpha))^2 + (L\sin\alpha)^2 + H^2}. \tag{17}$$

Mit $V = \dfrac{dR(\alpha)}{dt}$ und $\alpha = \omega \cdot t$ errechnet sich die für die Dopplerfrequenzverschiebung wichtige Geschwindigkeit zu

$$V = \frac{\omega L(\sin\omega\cdot t + \cos\omega\cdot t)}{\sqrt{(\Delta y + L(1-\cos\omega\cdot t))^2 + (L\sin\omega\cdot t)^2 + H^2}}. \tag{18}$$

Mit Hilfe der Formel (11) und (12) errechnet sich schließlich die gesuchte, erfindungsgemäße (Punkt) Referenzfunktion zu:

$$S_{ref}(\alpha = \omega\cdot t, L + \Delta y, H) = \sin 2\pi f_s (1 + \frac{2\omega L(\sin\omega\cdot t + \cos\omega\cdot t)}{c\cdot\sqrt{(\Delta y + L(1-\cos\omega\cdot t))^2 + (L\sin\omega\cdot t)^2 + H^2}}) \tag{19}$$

## Patentansprüche

1. ROSAR-Verfahren, das pulsfrequent oder im FM-CW-Betrieb sowie im cm- bzw. mm-Betrieb arbeitet, zur Erkennung, Durchdringung und Auswertung von Objekten, die senkrecht unter dem das ROSAR-Gerät tragenden Hubschrauber liegen, **dadurch gekennzeichnet, dass** unter Nutzung einer großen Entfernung der Empfangsantenne zum Drehpunkt des Hubschraubers von jeder Koordinate des Mittelpunktes einer Auflösezelle in dem abzubildenden Gebiet ein eigenes koordinaten-spezifisches Dopplersignal als Referenzsignal gebildet wird, wobei nur ein einziges dieser Referenzsignale für jeden einzelnen Kreisring berechnet wird.

2. ROSAR-Verfahren nach Anspruch 1, **dadurch gekennzeichnet, dass** das Referenzsignal kreuzkorrelierend schrittweise über das Entfernungssignal geschoben wird.

3. ROSAR-Verfahren nach Anspruch 1 oder 2, **dadurch gekennzeichnet, dass** für die Mittelpunkte der Auflösezellen zur Ermittlung einer Referenzfunktion $S_{ref}$ von der feststehenden Sendeantenne ein kontinuierliches Sendesignal gesendet wird.

4. ROSAR-Verfahren nach einem der Ansprüche 1 bis 3, **dadurch gekennzeichnet, dass** ein Kreisring eine Dicke von $\Delta y$ aufweist und direkt unter der Empfangsantenne gelegt ist.

## Claims

1. ROSAR method which operates at a pulse frequency or using the FMCW mode and in the centrimetric or millimetric band, for identification, penetration and evaluation of objects which are located at right angles underneath the helicopter to which the ROSAR equipment is fitted, **characterized in that** a dedicated coordinate-specific Doppler signal is formed as a reference signal using a large distance between the receiving antenna and the rotation point of the helicopter from each coordinate of the centre point of a resolution cell in the region to be imaged, with only a single one of these reference signals being calculated for each individual circular ring.

2. ROSAR method according to Claim 1, **characterized in that** the reference signal is shifted step-by-step with respect to the range signal, for cross-correlation.

3. ROSAR method according to Claim 1 or 2, **characterized in that** a continuous transmission signal is transmitted from the stationary transmitting antenna for the centre points of the resolution cells, in order to determine a reference function $S_{ref}$.

4. ROSAR method according to one of Claims 1 to 3, **characterized in that** a circular ring has a thickness of $\Delta y$, and is located directly underneath the receiving antenna.

**Revendications**

1. Procédé ROSAR qui fonctionne au moyen de nombreuses impulsions ou en modulation de fréquence à ondes continues (FM-CW) ainsi que dans le domaine des ondes centimétriques ou selon le cas millimétriques, pour la reconnaissance, la pénétration et l'évaluation d'objets qui se trouvent verticalement au-dessous de l'hélicoptère portant l'appareil ROSAR, **caractérisé en ce que** l'on forme à partir de chaque coordonnée du centre d'une cellule de résolution dans la zone à représenter un signal Doppler propre spécifique à la coordonnée comme signal de référence en utilisant une grande distance de l'antenne réceptrice par rapport au point de rotation de l'hélicoptère, un seul de ces signaux de référence étant calculé pour chaque anneau circulaire individuel.

2. Procédé ROSAR selon la revendication 1, **caractérisé en ce que** le signal de référence est progressivement glissé sur le signal de distance tout en effectuant la corrélation croisée.

3. Procédé ROSAR selon la revendication 1 ou 2, **caractérisé en ce que** pour les centres des cellules de résolution un signal d'émission continu est émis par l'antenne émettrice fixe afin de déterminer une fonction de référence $S_{ref}$.

4. Procédé ROSAR selon l'une quelconque des revendications 1 à 3, **caractérisé en ce qu'**un anneau annulaire présente une épaisseur de $\Delta y$ et est placé directement au-dessous de l'antenne réceptrice.

Fig. 1

Fig. 2

Fig. 3a

Fig. 3b